# EUROPEAN PATENT APPLICATION

(11) **EP 2 549 422 A1**
(43) Date of publication of application: **23.01.2013**
(21) Application number: 11174828.1
(22) Date of filing: 21.07.2011
(51) Int. Cl.: G06Q 30/00

(54) **Customer management system and customer management method**

(71) Applicant: Ichimura, Takahiro, Shiba 6975-44 (JP)
(72) Inventor: Ichimura, Takahiro, Shiba 6975-44 (JP)
(74) Representative: HOFFMANN EITLE

(57) **Abstract**

A customer management system includes a shop terminal having a reading unit reading personal information from a storage medium and a writing unit, and includes a server having an allocation unit and a transaction information storage unit. The reading unit reads from the storage medium all shop IDs and customer IDs. The server also has a customer ID extraction unit extracting the shop ID related to a shop and the customer ID associated with the shop ID from all the shop IDs and the customer IDs, a transaction information extraction unit extracting from the transaction information storage unit transaction information associated with the shop ID and the customer ID, and a transaction information update unit storing transaction information, which is obtained by adding information on a transaction with the customer to the extracted transaction information, in the transaction information storage unit so as to be associated with the customer ID.

## Description

### BACKGROUND OF THE INVENTION

### 1. Field of the Invention

The present invention relates to the technology of a system that performs customer management for each of shops using a storage medium available in common between the plurality of shops.

### 2. Description of the Related Art

Recently, many shops have adopted a point card system that assigns points according to services used by customers (Patent Document 1, etc.). It is expected that such a point card system can contribute to the fixation of the customers and, by extension, to an increase in the sales of the shops.

However, since most of the customers generally have a plurality of point cards, they are dissatisfied with the conditions that the point cards take up much space, the presence of the point cards are forgotten, the point cards are expired before the customers know the expiration dates of the point cards, and the number of points of the point cards cannot be easily checked.

In order to address such problems, there has been proposed a point processing method that makes it possible for customers having a plurality of point cards to eliminate troublesome operations in handling the plurality of point cards and check information on the point cards at appropriate time, thereby attaining an improvement in the convenience of the point cards (Patent Document 2).

However, the above technology gives rise to the problems that it requires the issuance of a plurality of point cards and companies issuing the point cards are faced with an increase in cost for issuing the point cards. On the other hand, the customers who have created the point cards are required to register all of their point cards in a predetermined database, which gives rise to the problem that the registration of the point cards is time-consuming.

Moreover, the above technology causes point information to be put together in the predetermined database, which gives rise to the problem that the risk of information leakage becomes high.

Furthermore, the above technology requires a system transition from a conventional system in which each of the shops performs point management to a system in which the point information of all the shops is collectively managed in the predetermined database, which gives rise to the problem that persons involved in the system transition are burdened with heavier paperwork.
Patent Document 1: JP-A-6-266970
Patent Document 2: JP-A-2008-310430

### SUMMARY OF THE INVENTION

In light of the above problems, it is an object of the present invention to provide a customer management system and a customer management method that uses a storage medium available in common between shops to reduce a correction to an existing system, thereby reducing a cost burdened on each of the shops and eliminating extra paperwork burdened on a customer.

According to an aspect of the present invention, a customer management system is provided that includes a shop terminal having a reading unit configured to read personal information from a storage medium in which the personal information on a customer is stored; and a server configured to be connected to the shop terminal via a communication network. The server has an allocation unit configured to allocate, after the server acquires the personal information read by the reading unit of the shop terminal installed in a shop, a shop ID corresponding to the shop and a customer ID unique to the shop so as to be associated with each other and a transaction information storage unit configured to store the shop ID, the customer ID corresponding to the shop ID, and transaction information with the customer corresponding to the customer ID so as to be associated with each other. The shop terminal has a writing unit configured to store the shop ID and the customer ID in the storage medium so as to be associated with each other. The reading unit of the shop terminal installed in the shop reads from the storage medium all the shop IDs and the customer IDs stored in the storage medium. The server has a customer ID extraction unit configured to extract the shop ID related to the shop notified by the shop and the customer ID associated with the shop ID from all the shop IDs and the customer IDs read by the reading unit, a transaction information extraction unit configured to extract from the transaction information storage unit the transaction information associated with the shop ID and the customer ID extracted by the customer ID extraction unit, and a transaction information update unit configured to store transaction information, which is obtained by adding information on a transaction with the customer presenting the storage medium to the transaction information extracted by the transaction information extraction unit, in the transaction information storage unit so as to be associated with the customer ID extracted by the customer ID extraction unit.

According to another aspect of the present invention, a customer management system is provided that includes a shop terminal having a reading unit configured to read personal information from a storage medium in which the personal information on a customer is stored; and a server configured to be connected to the shop terminal via a communication network. The server has an allocation unit configured to allocate, after the server acquires the personal information read by the reading unit of the shop terminal installed in a shop, a shop ID corresponding to the shop and a customer ID unique to the shop so as to be associated with each other and a transaction information storage unit configured to store the shop ID, the customer ID corresponding to the shop ID, and transaction information with the customer corresponding to the customer ID so as to be associated with each other. The shop terminal has a writing unit configured to store the shop ID and the customer ID in the storage medium so as to be associated with each other. The reading unit of the shop terminal installed in the shop reads from the storage medium all the shop IDs and the customer IDs stored in the storage medium. The shop terminal installed in the shop has a customer ID extraction unit configured to extract the shop ID related to the shop and the customer ID associated with the shop ID from all the shop IDs and the customer IDs read by the reading unit. The server has a transaction information extraction unit configured to extract from the transaction information storage unit the transaction information associated with the shop ID related to the shop notified by the shop and the customer ID extracted by the customer ID extraction unit and a transaction information update unit configured to store transaction information, which is obtained by adding information on a transaction with the customer presenting the storage medium to the transaction information extracted by the transaction information extraction unit, in the transaction information storage unit so as to be associated with the customer ID extracted by the customer ID extraction unit.

Other objects, features and advantages of the present invention will become more apparent from the following detailed description when read in conjunction with the accompanying drawings.

### BRIEF DESCRIPTION OF THE DRAWINGS

FIG. 1 is a diagram for illustrating the brief overview of a customer management system according to an embodiment;
FIG. 2 is a function block diagram (1) of the customer management system according to the embodiment;
FIG. 3 is a diagram showing an example of data stored in a storage medium according to the embodiment;
FIG. 4 is a diagram showing an example of data stored in a transaction information storage unit (a server of each shop) according to the embodiment;
FIG. 5 is a function block diagram (2) of the customer management system according to the embodiment;
FIG. 6 is a diagram showing an example of data stored in a transaction information integration and storage unit (a server of a data management company) according to the embodiment;
FIG. 7 is a flowchart showing an example of processing (an example of processing where a customer ID is assigned) by the customer management system according to the embodiment;
FIG. 8 is a flowchart showing an example of processing (an example of processing where transaction information is updated) by the customer management system according to the embodiment;
FIG. 9 is a flowchart showing an example of processing (an example of processing where transaction information on all shops is displayed in list form) by the customer management system according to the embodiment; and
FIG. 10 is a diagram showing an example of the hardware configuration of the servers included in the customer management system according to the embodiment.

### DETAILED DESCRIPTION OF THE PREFERRED EMBODIMENTS

Referring to the accompanying drawings, a description is given of the best mode for carrying out an embodiment of the present invention.

### (Principle of Operations of Customer Management System According to Embodiment)

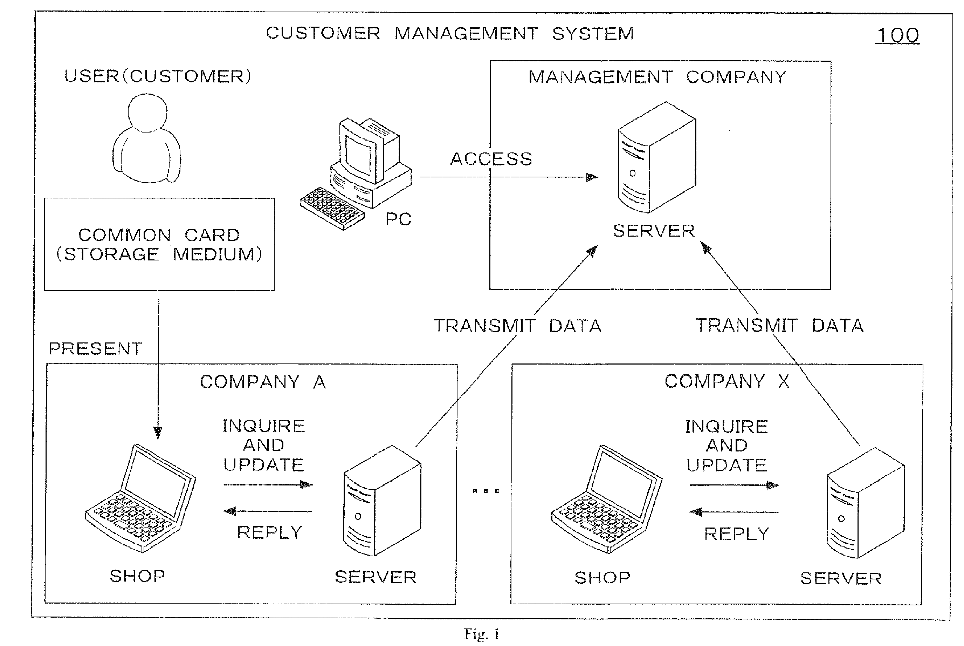

Referring to FIG. 1, a description is given of the brief overview of a customer management system 100 according to the embodiment. Here, FIG. 1 is a diagram for illustrating the brief overview of the customer management system 100. As shown in FIG. 1, the customer management system 100 assumes the existence of a user (customer) who has a common card (for example, a storage medium such as a point card and a mobile phone) available in common between shops, a plurality of companies (company A, ... and company X) that perform business transactions with the user, and a management company that integrally holds data on the business transactions between the user and each of the companies.

First, a description is given of processing as a first phase of the customer management system 100 in which the company A issues (or the other companies may issue) a point card to the user. The user presents the common card, in which personal information on the user himself/herself is stored, to a shop terminal installed in the shop of the company A. Then, the shop terminal reads from the common card the personal information and a common card ID stored in the card, and transmits the read data to the server of the company A.

Next, the server of the company A stores the received personal information and the common card ID, a shop identification ID, and a customer identification ID so as to be associated with each other, and transmits the shop identification ID and the customer identification ID to the shop terminal. On the other hand, the shop terminal writes in the common card presented by the user the received shop identification ID and the customer identification ID so as to be associated with each other. When each of the companies (each of the shops) performs the above processing, the shop identification ID allocated to the user by each of the companies and the customer identification ID unique to the shop identification ID are stored in the common card so as to be associated with each other.

Then, a description is given of processing as a second phase of the customer management system 100 in which the company A performs (or the other companies may perform) a business transaction with the user. At the time of purchasing a product at or receiving a service from the shop of the company A, the user presents his/her common card to the shop terminal. Then, the shop terminal reads shop identification IDs and customer identification IDs stored in the presented common card, and transmits the read shop identification IDs and the customer identification IDs to the server of the company A.

Then, the server of the company A extracts the shop identification ID of the own shop from the received shop identification IDs, and extracts the customer identification ID associated with the extracted shop identification ID. Moreover, the server of the company A extracts transaction information linked to the customer identification ID from its own customer transaction database, and transmits the extracted transaction information to the shop terminal.

The shop terminal, which has received the transaction information from the server of the company A, updates the transaction information (for example, the shop terminal allocates points) according to the condition of the business transaction with the user, and transmits the updated transaction information to the server of the company A. On the other hand, the server of the company A stores the received transaction information. When each of the companies (each of the shops) performs the above processing, business transactions with the customer are accumulated in the server of each of the companies. Further, the user is only required to have the single common card on the condition that the same processing as the above is performed in the companies other than the company A. Therefore, it can be said that the customer management system 100 is very convenient for the user.

Next, a description is given of processing as a third phase of the customer management system 100 in which user's transaction information is displayed on a user terminal. The server of each of the companies stores transaction information with the user so as to be associated with personal information, a common card ID, a shop ID of each of the companies, and a customer ID unique to each of the shops. The server of each of the companies is connected to the server of the management company, and transmits the data stored therein to the server of the management company. In other words, the server of the management company stores the user's transaction information with each of the companies so as to be associated with the personal information, the common card ID, the shop ID of each of the companies, and the customer ID unique to each of the shops.

Then, when the server of the management company receives the common card ID from the user terminal (for example, a PC (Personal Computer)), the server of the management company extracts the transaction information linked to the common card ID from the transaction information stored therein. In addition, the server of the management company transmits the extracted transaction information to the user terminal, and the user terminal displays the received transaction information for each of the shop IDs via a browser. With the above processing, the customer management system 100 can display the user's transaction information in list form for each of the shop IDs.

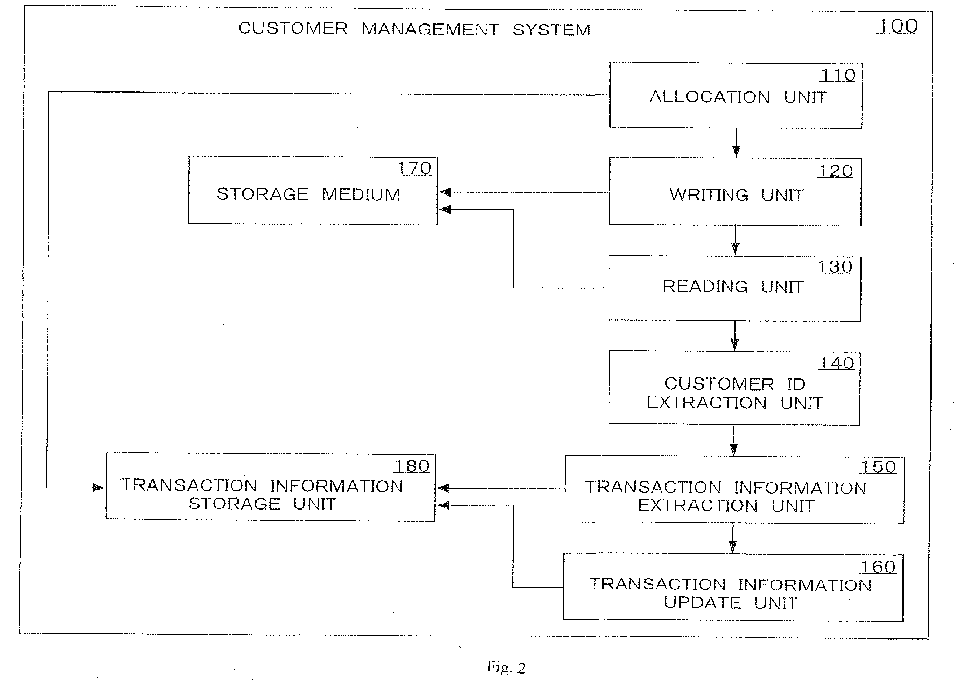

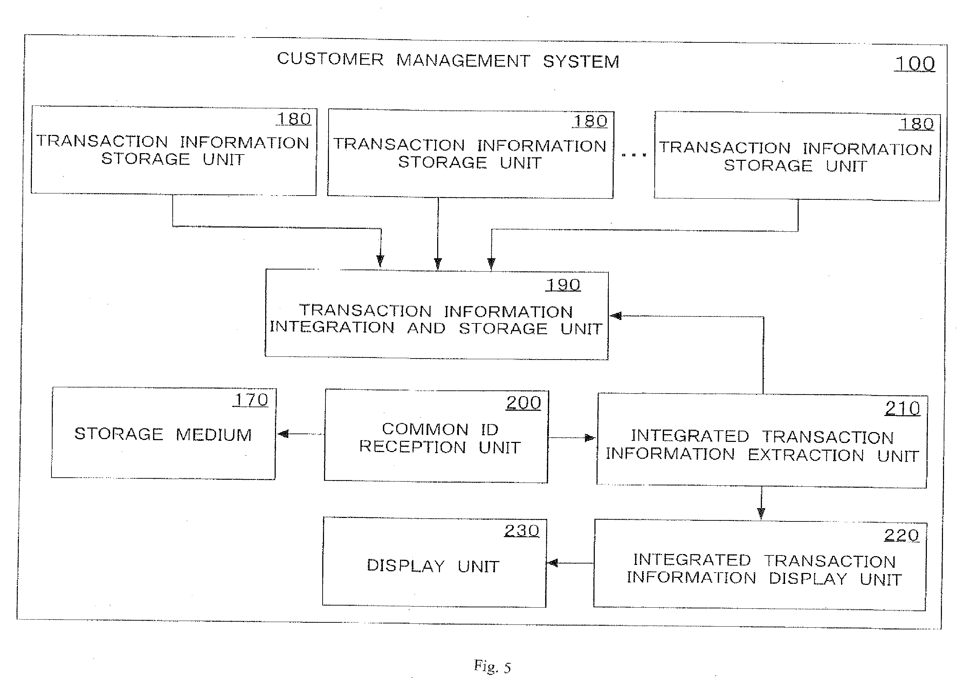

Referring next to FIGS. 2 through 6, a description is given of the principle of the operations of the customer management system 100. FIGS. 2 and 5 are function block diagrams of the customer management system 100. As shown in FIG. 2, the customer management system 100 has an allocation unit 110, a writing unit 120, a reading unit 130, a customer ID extraction unit 140, a transaction information extraction unit 150, a transaction information update unit 160, a storage medium 170, and a transaction information storage unit 180.

The allocation unit 110 allocates a shop ID related to a shop and a customer ID unique to the shop so as to be associated with each other. For example, in the description referring to FIG. 1, the processing of the allocation unit 110 is equivalent to the processing in which the server of the company A stores the personal information, the common card ID, the shop identification ID, and the customer identification ID so as to be associated with each other.

The writing unit 120 stores the shop ID and the customer ID allocated by the allocation unit 110 in the storage medium 170. For example, in the description referring to FIG. 1, the processing of the writing unit 120 is equivalent to the processing in which the shop terminal writes in the common card presented by the user the shop identification ID and the customer identification ID so as to be associated with each other. When the shop terminal of each of the shops performs this processing, a shop identification ID allocated to the user by each of the shops and a customer identification ID unique to the shop identification ID are stored in the storage medium 170 so as to be associated with each other.

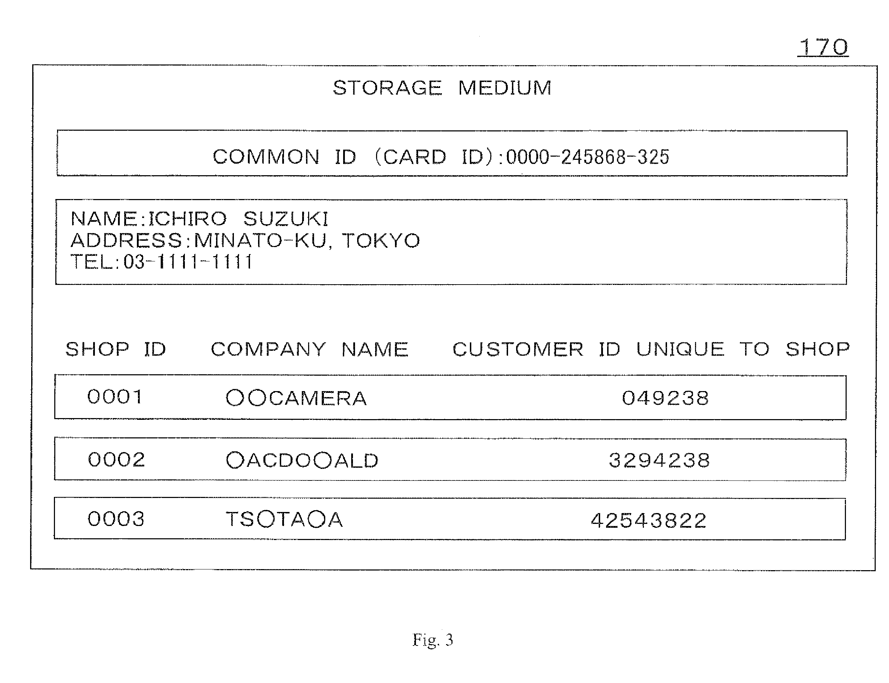

For example, the storage medium 170 may be a card using the technology of RFID (Radio Frequency Identification) or a mobile phone. Here, FIG. 3 shows an example of data stored in the storage medium 170. As shown in FIG. 3, in the storage medium 170 are stored a common ID unique to the storage medium 170, personal information on the owner of the storage medium 170, shop IDs, company names, and customer IDs. In FIG. 3, the common ID "0000-245868-325" and the personal information "Name: Ichiro Suzuki," "Address: Minato-ku, Tokyo," and "Tel: 03-1111-1111" are stored. Further, the shop IDs, the company names, and the customer IDs are stored in the storage medium 170 so as to be associated with each other. In FIG. 3, the shop ID "0001," the company name "○○ Camera," and the customer ID "049238" are stored so as to be associated with each other, the shop ID "0002," the company name "○acDo○ald," and the customer ID "3294238" are stored so as to be associated with each other, and the shop ID "0003," the company name "Ts○ TA○A ," and the customer ID "42543822" are stored so as to be associated with each other.

The reading unit 130 reads shop IDs and customer IDs from the storage medium 170. For example, in the description referring to FIG. 1, the processing of reading unit 130 is equivalent to the processing in which the shop terminal reads the shop identification IDs and the customer identification IDs stored in the common card presented by the customer and then transmits the read shop identification IDs and the customer identification IDs to the server of the company A. The processing of the reading unit 130 may be performed by a shop terminal or be cooperatively performed by a shop and a server connected to the shop.

The customer ID extraction unit 140 extracts the shop ID of its own shop from the shop IDs and the customer IDs read by the reading unit 130 and then extracts the customer ID associated with the extracted shop ID. Here, the customer ID extraction unit 140 stores the shop ID of the own shop. In the description referring to FIG. 1, the processing of the customer ID extraction unit 140 is equivalent to the processing in which the server of the company A extracts the shop identification ID of the own shop from the received shop identification IDs and then extracts the customer identification ID associated with the extracted shop identification ID.

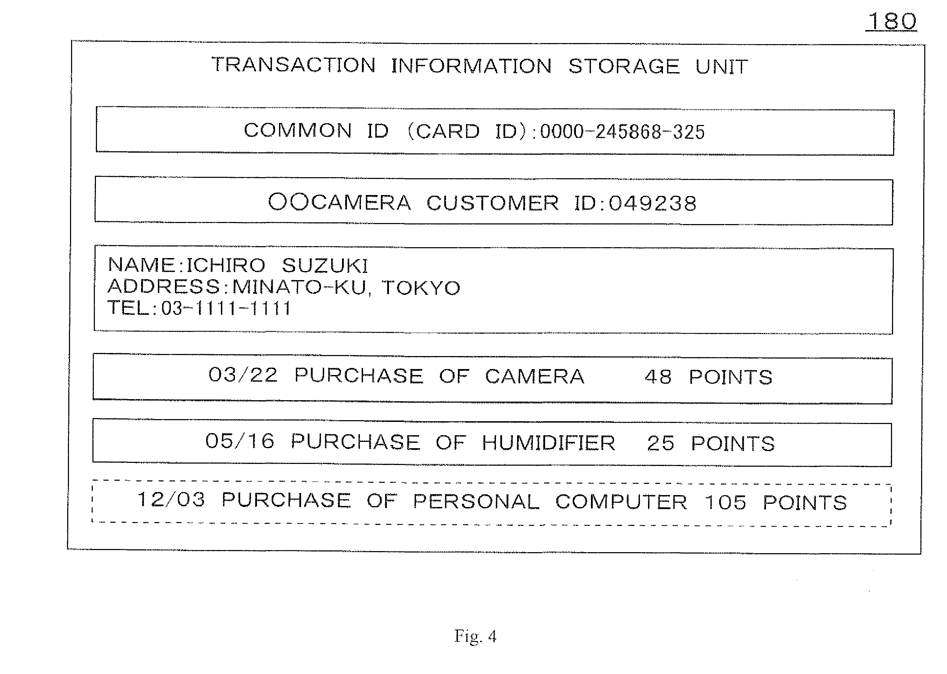

The transaction information storage unit 180 stores the common card ID, the shop ID related to the shop and the customer ID unique to the shop which are allocated by the allocation unit 110, the personal information, and transaction information (transaction records) with the customer so as to be associated with each other. Here, as an example of the data stored in the transaction information storage unit 180, the transaction information on the company "○○ Camera" is shown in FIG. 4. As shown in FIG. 4, "0000-245868-325" is stored as the common ID, "049238" is stored as the customer ID unique to the shop, and "Name: Ichiro Suzuki," "Address: Minato-ku, Tokyo," and "Tel: 03-1111-1111" are stored as the personal information. Further, the transaction information storage unit 180 stores the transaction information "Transaction Date: March 2," "Transaction Contents: Purchase of Camera," and "Number of Assigned Points: 48 Points," the transaction information "Transaction Date: May 16," "Transaction Contents: Purchase of Humidifier," and "Number of Assigned Points: 25 Points," and the transaction information "Transaction Date: December 3, " "Transaction Contents: Purchase of Personal Computer," and "Number of Assigned Points: 105 Points."

The transaction information extraction unit 150 extracts from the transaction information storage unit 180 the transaction information linked to the customer ID extracted by the customer ID extraction unit 140. In the example shown in FIG. 4, when the customer ID extracted by the customer ID extraction unit 140 is "049238," the transaction information extraction unit 150 extracts the transaction information such as "Transaction Date: March 22," "Transaction Contents: Purchase of Camera," "Number of Assigned Points: 48 Points," "Transaction Date: May 16," "Transaction Contents: Purchase of Humidifier," and "Number of Assigned Points: 25 Points." In the description referring to FIG. 1, the processing of the transaction information extraction unit 150 is equivalent to the processing in which the server of the company A extracts the transaction information linked to the customer identification ID from the own customer transaction information database of its own and transmits the extracted transaction information to the shop terminal.

The transaction information update unit 160 adds the latest transaction information with the customer to the transaction information extracted by the transaction information extraction unit 150, and stores the transaction information updated with the latest transaction information in the transaction information storage unit 180. In the example shown in FIG. 4, the transaction information update unit 160 stores in the transaction information storage unit 180 the transaction information in which the latest transaction "Transaction Date: December 3," "Transaction Contents: Purchase of Personal Computer," and "Number of Assigned Points: 105 Points" (shown in the part indicated by dotted lines in FIG. 4) is added to the previous transaction information "Transaction Date: March 22," "Transaction Contents: Purchase of Camera," and "Number of Assigned Points: 48 Points" and the transaction information "Transaction Date: May 16," "Transaction Contents: Purchase of Humidifier," and "Number of Assigned Points: 25 Points."

In the description referring to FIG. 1, the processing of the transaction information update unit 160 is equivalent to the processing in which the shop terminal having received the transaction information from the server of the company A updates (for example, the shop terminal assigns points) the transaction information according to the situation of business transaction with the user and transmits the updated transaction information to the server of the company A. Moreover, the processing of the transaction information update unit 160 includes storing the transaction information received by the server of the company A.

Referring next to FIG. 5, a description is given of the principle of the operations of the customer management system 100. As shown in FIG. 5, the customer management system 100 has a storage medium 170, a plurality of transaction information storage units 180, a transaction information integration and storage unit 190, a common ID reception unit 200, an integrated transaction information extraction unit 210, an integrated transaction information display unit 220, and a display unit 230.

Each of the transaction information storage units 180 is provided in each shop and connected to the transaction information integration and storage unit 190. Then, each of the transaction information storage units 180 notifies the transaction information integration and storage unit 190 of transaction information stored therein, and the transaction information integration and storage unit 190 stores the received transaction information. In the description referring to FIG. 1, the processing of the transaction information integration and storage unit 190 is equivalent to the processing in which the server of the management company stores the user's transaction information with each of the companies so as to be associated with the personal information, the common card ID, the shop ID of each of the companies, and the customer ID unique to each of the shops.

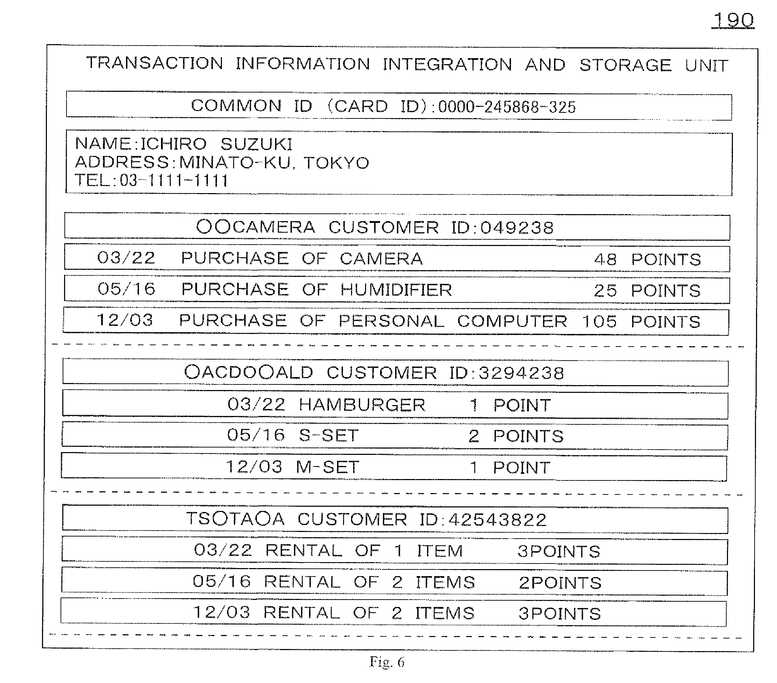

As shown in FIG. 6, the transaction information integration and storage unit 190 stores the personal information, the customer ID of each of the shops, and the transaction information so as to be linked to the common ID. In FIG. 6, the transaction information integration and storage unit 190 stores the personal information, the customer ID "049238," the transaction information corresponding to the customer ID "049238," the customer ID "3294238," the transaction information corresponding to the customer ID "3294238," the customer ID "42543822," and the transaction information corresponding to the customer ID"42543822," so as to be linked to the common ID "0000-245868-325."

The common ID reception unit 200 receives a common ID. In the description referring to FIG. 1, the processing of the common ID reception unit 200 is equivalent to the processing in which the server of the management company receives the common card ID from the user terminal (for example, a PC).

The integrated transaction information extraction unit 210 extracts from transaction information stored therein the transaction information or the like linked to the common ID received by the common ID reception unit 200. For example, when the common ID reception unit 200 receives the common ID "0000-245868-325," the integrated transaction information extraction unit 210 extracts the personal information, the shop ID of each of the shops, and the transaction information corresponding to each of the shop IDs, which are linked to the common ID "0000-245868-325." Further, in the description referring to FIG. 1, the processing of the integrated transaction information extraction unit 210 is equivalent to the processing in which the server of the management company extracts the transaction information linked to the common card ID from the transaction information stored therein. Moreover, the processing of the integrated transaction information extraction unit 210 includes processing in which the server of the management company transmits the extracted transaction information to the user terminal.

The integrated transaction information display unit 220 displays on the display unit 230 transaction information extracted by the integrated transaction information extraction unit 210 for each of the shop IDs. For example, the integrated transaction information display unit 220 displays transaction information on the display unit 230 in a pattern shown in FIG. 6. Further, in the description referring to FIG. 1, the processing of the integrated transaction information display unit 220 is equivalent to the processing in which the received transaction information is displayed on the user terminal for each of the shop IDs via the browser. With the above processing, the customer management system 100 can display the user's transaction information in list form for each of the shops.

### (Example of Processing by Customer Management System According to Embodiment)

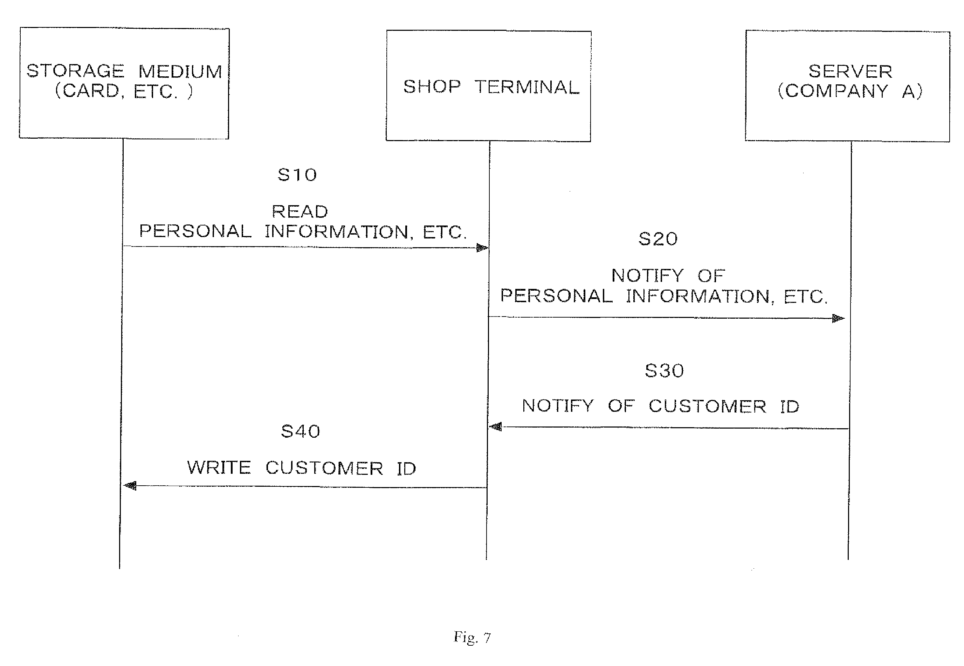

Referring to FIGS. 7 through 9, a description is given of the flow of processing by the customer management system 100. As shown in FIG. 1, an example of the processing by the customer management system 100 assumes the existence of the user (customer) who has the storage medium 170 (such as a point card and a mobile phone), the plurality of companies (company A, ... and company X) that perform business transactions with the user, and the management company that integrally holds data on the business transactions between the user and each of the companies. Further, it is assumed that each of the companies has the transaction information storage unit 180, and that the management company has the transaction information integration and storage unit 190.
(1) Referring to FIG. 7, a description is given of an example of processing where the customer management system 100 assigns a customer ID. Here, FIG. 7 is a sequence diagram showing the flow of the processing where the customer management system 100 assigns the customer ID.

In step S10, when the customer presents the storage medium 170 in which his/her personal information is stored to a shop terminal installed in the shop of the company A, the reading unit 130 reads the customer's personal information stored in the storage medium 170 and a common ID unique to the storage medium 170. For example, the personal information "Name: Ichiro Suzuki," "Address: Minato-ku, Tokyo," and "Tel: 03-1111-1111" and the common ID unique to the storage medium 170 "0000-245868-325" are read (see FIG. 3).

In step S20, the reading unit 130 transmits the personal information and the common ID read in step S10 to the server of the company A. In step S30, the allocation unit 110 allocates a received shop ID and a customer ID unique to the shop ID, stores the personal information, the common ID, the shop ID, and the customer ID in the transaction information storage unit 180 so as to be associated with each other, and transmits the shop ID and the customer ID to the shop terminal. For example, the shop ID is "0001," and the customer ID is "049238" (see FIG. 3).

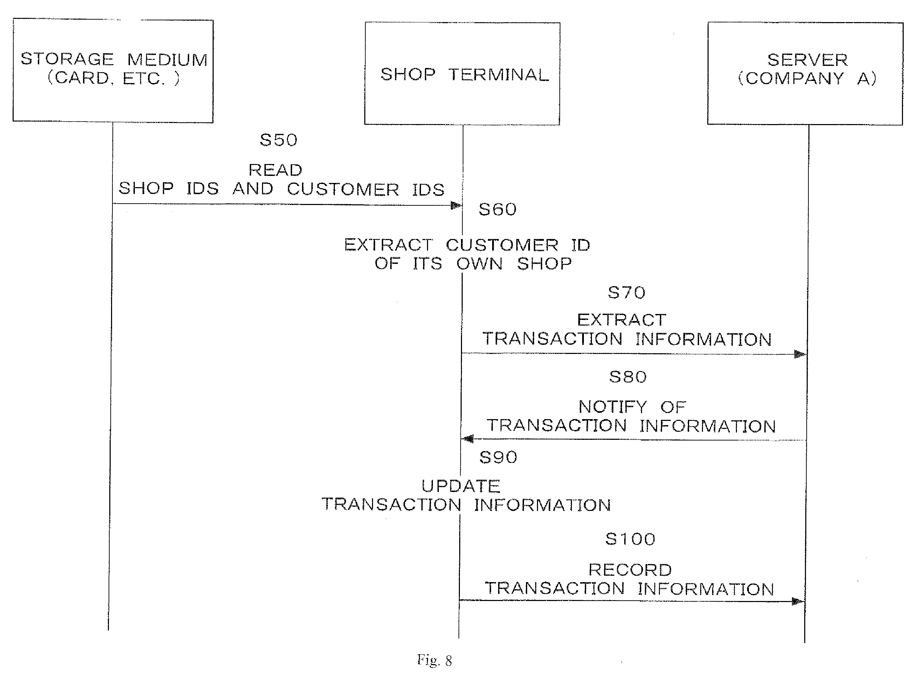

In step S40, the writing unit 120 stores the received shop ID and the customer ID in the storage medium 170 presented by the customer so as to be associated with each other. FIG. 3 shows an example of the shop IDs and the customer IDs written in the storage unit 170 by the writing unit 120. When each of the companies (each of the shops) performs the above processing, the shop ID and the customer ID unique to the shop ID allocated to the user by each of the companies are stored in the storage medium 170 so as to be associated with each other. In other words, it is not required to issue a point card for each of the shops.
(2) Referring next to FIG. 8, a description is given of an example where the customer management system 100 updates transaction information. Here, FIG. 8 is a sequence diagram showing the flow of the processing where the customer management system 100 updates the transaction information.

When a customer presents the storage medium 170 to a shop terminal at the time of purchasing a product at or receiving a service from the shop of the company A, the reading unit 130 reads shop IDs and customer IDs stored in the presented storage medium 170 in step S50. For example, as shown in FIG. 3, three pairs of the shop IDs and the customer IDs "0001 and 049238," "0002 and 3294238," and "0003 and 42543822" are read.

In step S60, the customer ID extraction unit 140 extracts the shop ID of its own shop from the read shop IDs and the customer ID associated with the extracted shop ID. For example, if the shop ID of the own shop is "0001," the customer ID "049238" associated with the shop ID "0001" is extracted. Further, in the example of this processing, the processing in step S60 is performed by the shop terminal. However, as described referring to FIG. 1, it may be performed by the server of the company A. Here, since the customer IDs "3294238" and "42543822" associated with the other shop IDs "0002" and "0003," respectively, are useless for the shop having the shop ID "0001," the security of customer information is ensured.

In step S70, the customer ID extraction unit 140 notifies the server of the company A of the extracted customer ID. In step S80, the transaction information extraction unit 150 extracts from the transaction information storage unit 180 transaction information stored so as to be linked to the received customer ID, and transmits the extracted transaction information to the shop terminal. For example, the transaction information extraction unit 150 extracts the transaction information linked to the customer ID "049238," and transmits it to the shop terminal. For example, as shown in FIG. 4, the transaction information "Transaction Date: March 22," transaction Contents: Purchase of Camera," and "Number of Assigned Points: 48 Points" and the transaction information "Transaction Date: May 16," "Transaction Contents: Purchase of Humidifier," and "Number of Assigned Points: 25 Points" are transmitted to the shop terminal.

In step S90, the transaction information update unit 160 updates the transaction information with that received from the transaction information extraction unit 150 (for example, the transaction information update unit 160 assigns points) according to the transaction with the customer, and transmits the updated transaction information to the server of the company A. Then, the server of the company A stores the received transaction information in the transaction information storage unit 180. For example, as shown in FIG. 4, the transaction information stored in the transaction information storage unit 180 is one in which the latest transaction information "Transaction Date: December 3," "Transaction Contents: Purchase of Personal Computer," and "Number of Assigned Points: 105 Points" (shown in the part indicated by the dotted lines in FIG. 4) is added to the previous transaction information "Transaction Date: March 22," "Transaction Contents: Purchase of Camera," and "Number of Assigned Points: 48 Points" and the previous transaction information "Transaction Date: May 16," "Transaction Contents: Purchase of Humidifier," and "Number of Assigned Points: 25 Points."

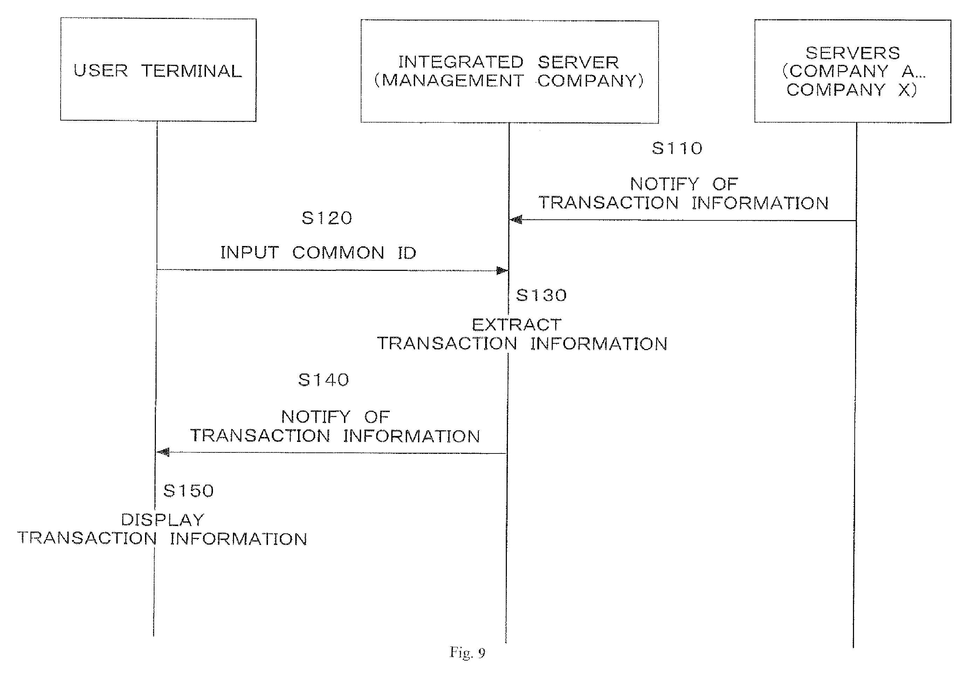

When each of the companies (each of the shops) performs the above processing, the transaction information with the customer is accumulated in the server of each of the companies. Further, only with the storage medium 170 available in common between the shops, similar processing is performed by the companies other than the company A. Therefore, the customer is only required to have the single storage medium 170. For this reason, the customer management system 100 is convenient for the customer.
(3) Referring next to FIG. 9, a description is given of an example of processing where the customer management system 100 displays transaction information on all shops in list form. Here, FIG. 9 is a sequence diagram showing the flow of the processing where the customer management system 100 displays the transaction information on all the shops in list form.

In step S110, each of the transaction information storage units 180 transmits a "common ID," "personal information," a "shop ID," a "customer ID," and "transaction information" stored therein to the transaction information integration and storage unit 190. Then, the transaction information integration and storage unit 190 stores the "personal information," the "shop ID," the "customer ID," and the "transaction information" so as to be linked to the "common ID." For example, as shown in FIG. 6, the transaction information integration and storage unit 190 stores the personal information such as "Name: Ichiro Suzuki," the shop IDs such as "0001" and "0002," the customer IDs such as "049238" and "3294238," and the transaction information such as "March 22, Purchase of Camera, 48 Points" and march 22, Hamburger, 1 Point," so as to be linked to the common ID "0000-245868-325."

On the other hand, when the common ID (for example, "0000-245868-325") is input to a user terminal, the common ID reception unit 200 receives the input common ID in step S120. In step S130, the integrated transaction information extraction unit 210 extracts from transaction information stored therein the transaction information and the shop ID linked to the common ID received by the common ID reception unit 200. For example, as shown in FIG. 6, the integrated transaction information extraction unit 210 extracts the transaction information such as "March 22, Purchase of Camera, 48 Points" and "March 22, Hamburger, 1 Point" and the shop IDs such as "0001" and "0002" stored so as to be linked to the common ID "0000245868-325."

In step S140, the integrated transaction information extraction unit 210 transmits the extracted transaction information and the shop IDs to the user terminal. In step S150, the integrated transaction information display unit 220 displays the received transaction information for each of the shop IDs via a browser provided in the user terminal. For example, as shown in FIG. 6, the integrated transaction information display unit 220 displays on the display unit the transaction information "March 22, Purchase of Camera, 48 Points" and the transaction information "March 22, Hamburger, 1 Point" for each of the shop IDs "000111 and "0002," respectively. With the above processing, the customer management system 100 can display the transaction information with the customer in list form for each of the shops.

### (Example of Hardware Configuration of Customer Management System According to Embodiment)

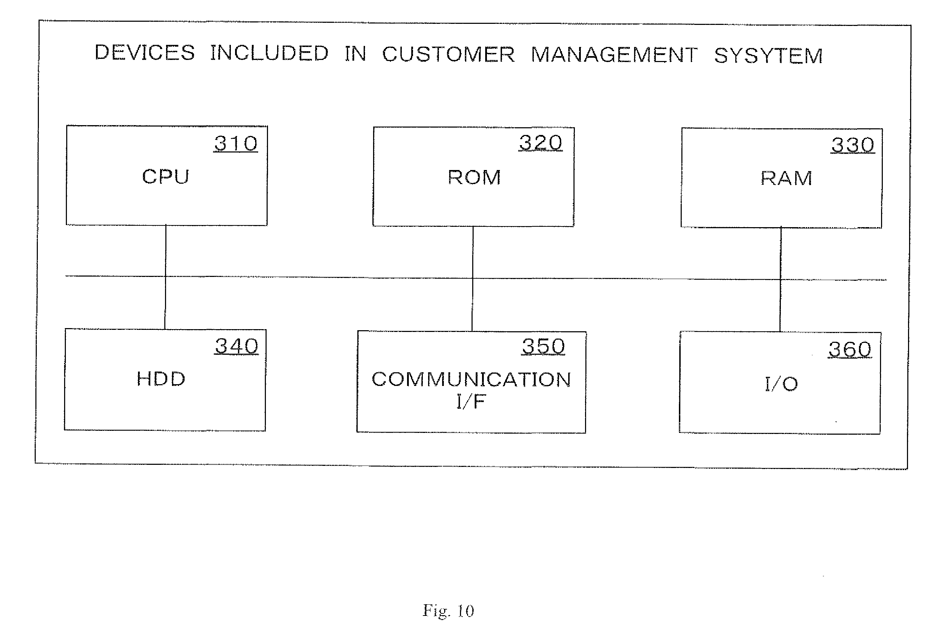

Referring to FIG. 10, a description is given of an example of the hardware configuration of devices included in the customer management system 100 according to the embodiment. FIG. 10 is a diagram showing the example of the hardware configuration of the devices included in the customer management system 100.

As shown in FIG. 10, the devices of the customer management system 100 are composed of a CPU (Central Processing Unit) 310, a ROM (Read-Only Memory) 320, a RAM (Random Access Memory) 330, a HDD (Hard Disk Drive) 340, a communication I/F (Interface) 350, and an input/output device 360.

The CPU 310 executes a program stored in the ROM 320, applies calculation processing to data expanded (loaded) into the RAM 330 in accordance with instructions from the program, and controls the devices as a whole. The ROM 320 stores the program and the data executed by the CPU 310. In the RAM 330, when the CPU 310 executes the program stored in the ROM 320, the program and the data to be executed are expanded (loaded) and calculated data is temporarily held during the calculation processing.

The HDD 340 stores an OS as basic software, an application program according to the embodiment, etc., together with associated data. The HDD 340 includes, for example, the transaction information storage unit 180 and the transaction information integration and storage unit 190. The communication I/F 260 transmits and receives data to and from peripheral equipment which is connected via a wireless or wired communication network and has other communication control functions. The input/output device 360 includes equipment that reads and writes data from and in the storage medium 170 such as a card and a mobile phone. Further, the input/output device 360 includes the display unit 230 composed of an input device such as a keyboard, a LCD (Liquid Crystal Display), etc., and serves as a user interface when the user uses the functions of the customer management system 100 and configures various settings for the functions.

Each of the units of the customer management system 100 may be realized in such a manner that the CPU 310 executes a program corresponding to each of the units stored in the ROM 320 or the HDD 340. Further, each of the units of the customer management system 100 may be configured in such a manner that processing related to each of the units is realized as hardware.

### (Overview)

The disclosed customer management system uses the storage medium available in common between the shops to reduce a correction to an existing system, thereby reducing cost burdened on each of the shops and eliminating extra paperwork burdened on the customer. Further, the disclosed customer management system causes each of the shops to manage customer information. Therefore, the customer information is decentralized, and thus the risk of information leakage is low.

## Claims

1. A customer management system comprising:
a shop terminal having a reading unit configured to read personal information, from a storage medium in which the personal information on a customer is stored; and
a server configured to be connected to the shop terminal via a communication network,
the server having
an allocation unit configured to allocate, after the server acquires the personal information read by the reading unit of the shop terminal installed in a shop, a shop ID corresponding to the shop and a customer ID unique to the shop so as to be associated with each other and
a transaction information storage unit configured to store the shop ID, the customer ID corresponding to the shop ID, and transaction information with the customer corresponding to the customer ID so as to be associated with each other,
the shop terminal having
a writing unit configured to store the shop ID and the customer ID in the storage medium so as to be associated with each other, wherein
the reading unit of the shop terminal installed in the shop reads from the storage medium all the shop IDs and the customer IDs stored in the storage medium, and
the server has
a customer ID extraction unit configured to extract the shop ID related to the shop notified by the shop and the customer ID associated with the shop ID from all the shop IDs and the customer IDs read by the reading unit,
a transaction information extraction unit configured to extract from the transaction information storage unit the transaction information associated with the shop ID and the customer ID extracted by the customer ID extraction unit, and
a transaction information update unit configured to store transaction information, which is obtained by adding information on a transaction with the customer presenting the storage medium to the transaction information extracted by the transaction information extraction unit, in the transaction information storage unit so as to be associated with the customer ID extracted by the customer ID extraction unit.

2. A customer management system comprising:
a shop terminal having a reading unit configured to read personal information from a storage medium in which the personal information on a customer is stored; and
a server configured to be connected to the shop terminal via a communication network,
the server having
an allocation unit configured to allocate, after the server acquires the personal information read by the reading unit of the shop terminal installed in a shop, a shop ID corresponding to the shop and a customer ID unique to the shop so as to be associated with each other and
a transaction information storage unit configured to store the shop ID, the customer ID corresponding to the shop ID, and transaction information with the customer corresponding to the customer ID so as to be associated with each other, the shop terminal having
a writing unit configured to store the shop ID and the customer ID in the storage medium so as to be associated with each other, wherein
the reading unit of the shop terminal installed in the shop reads from the storage medium all the shop IDs and the customer IDs stored in the storage medium,
the shop terminal installed in the shop has
a customer ID extraction unit configured to extract the shop ID related to the shop and the customer ID associated with the shop ID from all the shop IDs and the customer IDs read by the reading unit, and
the server has
a transaction information extraction unit configured to extract from the transaction information storage unit the transaction information associated with the shop ID related to the shop notified by the shop and the customer ID extracted by the customer ID extraction unit and
a transaction information update unit configured to store transaction, information, which is obtained by adding information on a transaction with the customer presenting the storage medium to the transaction information extracted by the transaction information extraction unit, in the transaction information storage unit so as to be associated with the customer ID extracted by the customer ID extraction unit.

3. A customer management method performed by a customer management system including
a shop terminal having a reading unit configured to read personal information from a storage medium in which the personal information on a customer is stored and having a writing unit and
a server configured to be connected to the shop terminal via a communication network and having an allocation unit, a transaction information storage unit, a customer ID extraction unit, a transaction information extraction unit, and a transaction information update unit,
the customer management method comprising:
allocating, by the allocation unit, a shop ID corresponding to a shop and a customer 10 unique to the shop so as to be associated with each other after the server acquires the personal information read by the reading unit of the shop terminal installed in the shop;
storing, by the transaction information storage unit, the shop ID, the customer ID corresponding to the shop ID, and transaction information with the customer corresponding to the customer ID so as to be associated with each other;
storing, by the writing unit, the shop ID and the customer ID in the storage medium so as to be associated with each other;
reading, by the reading unit of the shop terminal installed in the shop, all the shop IDs and the customer IDs stored in the storage medium from the storage medium;
extracting, by the customer ID extraction unit, the shop ID related to the shop notified by the shop and the customer ID associated with the shop ID from all the shop IDs and the customer IDs read by the reading unit;
extracting, by the transaction information extraction unit, the transaction information, which is associated with the shop ID and the customer ID extracted by the customer ID extraction unit, from the transaction information storage unit; and
storing, by the transaction information update unit, transaction information, which is obtained by adding information on a transaction with the customer presenting the storage medium to the transaction information extracted by the transaction information extraction unit, in the transaction information storage unit so as to be associated with the customer 1D extracted by the customer ID extraction unit.

4. A customer management method performed by a customer management system including
a shop terminal having a reading unit configured to read personal information from a storage medium in which the personal information on a customer is stored, a writing unit, and a customer ID extraction unit and
a server configured to be connected to the shop terminal via a communication network and having an allocation unit, a transaction information storage unit, a transaction information extraction unit, and a transaction information update unit, the customer management method comprising:
allocating, by the allocation unit, a shop ID corresponding to a shop and a customer ID unique to the shop so as to be associated with each other after the server acquires the personal information read by the reading unit of the shop terminal installed in the shop;
storing, by the transaction information storage unit, the shop ID, the customer ID corresponding to the shop ID, and transaction information with the customer corresponding to the customer ID so as to be associated with each other;
storing, by the writing unit, the shop ID and the customer ID in the storage medium so as to be associated with each other;
reading, by the reading unit of the shop terminal installed in the shop, all the shop IDs and the customer IDs stored in the storage medium from the storage medium;
extracting, by the customer ID extraction unit of the shop terminal installed in the shop, the shop ID related to the shop and the customer 1D associated with the shop ID from all the shop IDs and the customer IDs read by the reading unit;
extracting, by the transaction information extraction unit, the transaction information associated with the shop TAO related to the shop notified by the shop and the customer ID extracted by the customer ID extraction unit from the transaction information storage unit; and
storing, by the transaction information update unit, transaction information, which is obtained by adding information on a transaction with the customer presenting the storage medium to the transaction information extracted by the transaction information extraction unit, in the transaction information storage unit so as to be associated with the customer ID extracted by the customer ID extraction unit.
